# EUROPEAN PATENT APPLICATION

(11) **EP 4 092 393 A1**
(43) Date of publication of application: **23.11.2022**
(21) Application number: 21174406.5
(22) Date of filing: 18.05.2021
(51) Int. Cl.: G01F 1/66, G01F 25/00

(54) **ULTRASONIC FLOW METER WITH ESTIMATION OF A FLOW RATE DISTRIBUTION**

(71) Applicant: Kamstrup A/S, 8660 Skanderborg (DK)
(72) Inventor: Laursen, Peter Schmidt, 8660 Skanderborg (DK); Sørensen, Jens Lykke, 8660 Skanderborg (DK); Holmegaard, Lotte, 8660 Skanderborg (DK)
(74) Representative: Plougmann Vingtoft a/s

(57) **Abstract**

A flow meter for measuring a flow rate (FR) of a fluid through a tube (TB) with a through-going opening for passage of the fluid. Multiple sets of ultrasonic transducers (UT1-UT6), wherein each set of ultrasonic transducers comprises first and second ultrasonic transducers (UT1, UT2) arranged for transmitting and receiving ultrasonic signals propagating through the fluid along a path (P1) inside the tube, wherein said multiple sets of ultrasonic transducers (UT1-UT6) are arranged for transmitting and receiving ultrasonic signals propagating through the fluid along different paths (P1, P2) inside the tube (TB). A control system operates the multiple sets of ultrasonic transducers (UT1-UT6) to generate respective sub-flow rates (FR1, FR2, FR3) of the fluid along the different paths (P1, P2). Based thereon, and preferably on additional inputs, the control system estimates a flow rate distribution (FD) of the fluid in a cross-sectional area of the tube (TB). The control system then corrects values for the individual sub-flow rates (FR1, FR2, FR3) of the fluid along the different paths (P1, P2) in response to said estimated flow rate distribution (FD). Finally, a signal indicative of the flow rate (FR) of the fluid is calculated in based on the corrected values for sub-flow rates of the fluid along the different paths (P1, P2).

## Description

### FIELD OF THE INVENTION

The present invention relates to the field of ultrasonic flow meters. More specifically it relates to the field of ultrasonic consumption meters, or utility meters, comprising an ultrasonic flow meter, such as ultrasonic consumption meters for measuring consumption data of a supplied utility, e.g. water, gas, heat, or cooling. More specifically, the invention provides an ultrasonic flow meter with increased measurement precision based on estimation (e.g. recognition) of a flow rate distribution.

### BACKGROUND OF THE INVENTION

Ultrasonic consumption meters are used for precision measurement of fluid flow in connection with consumption meters for measuring a consumed quantity of a supplied utility (e.g. heat, cooling or water). An ultrasonic consumption meter measures transit times of ultrasonic signals so as to determine a flow rate of a fluid flowing in a flow channel by use of known operation principles for transit time flow meters.

A consumption meter may simply measure the consumed amount, e.g. a volume of water, and utility companies may base the billing of the consumers on this amount. However, for heat and cooling meters, temperature sensors are used for measuring the temperature of the fluid, whereby the consumer may be billed in accordance with energy extracted from the supplied liquid. Such ultrasonic consumption meters may be used in connection with district heating, district cooling and/or distributed water supply.

A typical ultrasonic flow meter, used as part of a consumption meter has a meter housing with a control circuit inside which is electrically connected to two or more spaced apart ultrasonic transducers, e.g. piezo electric transducers. The ultrasonic transducers are mounted on the flow channel in a way so that ultrasonic signals can be introduced into the fluid in the flow channel, by one of the ultrasonic transducers, and travel along a measuring section to be detected by the other ultrasonic transducer after the passage. The operation of the ultrasonic transducers is controlled by the control circuit, which is electrically connected to the transducers.

Especially for larger flow meters, the flow rate distribution of the fluid inside flow channel may vary significantly depending on the piping connected to the flow meter, flow speed, temperature etc.

Thus, for large meters requiring high precision measurements of the flow, at both high and low flow rates, multiple sets of ultrasonic transducers are often required. The ultrasonic wave paths defined by the transducer pairs can be arranged to cover the flow channel cavity in geometries in a fashion to provide a good averaging of specific flow rate distributions.

Such distributions could be swirling flow, where the secondary flow constitutes spirals travelling downstream along the primary flow. They could also involve flow stratification induced by temperature differences between fluid and pipe. Typically this results in convective flow processes which when comparable to the primary flow in magnitude cause the main fluid transport to take place primarily at the top or the bottom of the pipe.

Being very dissimilar these flow rate distributions are not equally well averaged with a single geometrical arrangement of ultrasonic wave paths. In general it is very difficult to arrange ultrasonic wave paths to handle an arbitrary flow rate distribution equally well in terms of averaging.

To provide a required flow rate precision, an increased number of ultrasonic transducers could in principle be used. However, this is expensive and causes the flow meter to be complex - both with respect to mechanical and electrical design, and thus such meter is complicated to manufacture.

### OBJECT OF THE INVENTION

An object of the present invention is to provide an alternative to the prior art.

In particular, it may be seen as an object of the present invention to provide a flow meter that solves the above mentioned problems of the prior art and improve known flow meters, such as consumption meters, in respect of flow rate measurement precision, also for larger flow tube diameters, and preferably also for high precision measurements for low flow rates as well as for high flow rates.

### SUMMARY OF THE INVENTION

In a first aspect, the invention provides a flow meter arranged to measure a flow rate of a fluid, the flow meter comprising:
- a tube with a through-going opening for passage of the fluid between an inlet and an outlet;
- multiple sets of ultrasonic transducers, wherein each set of ultrasonic transducers comprises first and second ultrasonic transducers arranged for transmitting and receiving ultrasonic signals propagating through the fluid along a path inside the tube, wherein said multiple sets of ultrasonic transducers are arranged for transmitting and receiving ultrasonic signals propagating through the fluid along different paths inside the tube; and
- a control system comprising one or more control circuits arranged for operating the multiple sets of ultrasonic transducers, and being arranged to generate values indicative of respective sub-flow rates of the fluid along the different paths accordingly,
characterized in that the control system is arranged to estimate a flow rate distribution of the fluid in a cross-sectional area of the tube in response to said values indicative of sub-flow rates, wherein the control system is arranged to correct values for the individual sub-flow rates of the fluid along the different paths in response to said estimated flow rate distribution, and wherein the control system is arranged to generate a signal indicative of the flow rate of the fluid based on said corrected values for sub-flow rates of the fluid along the different paths.

The invention is based on measurement of sub-flow rates of different ultrasonic paths formed by multiple sets of ultrasonic transducers, as known in the art. However, instead of merely averaging the measured sub-flow rates, the invention is advantageous since an estimation of a flow rate distribution of the fluid inside the tube is performed. This allows discrimination between a plurality of different known flow rate distributions, and with the given configuration of the ultrasonic paths formed by the ultrasonic transducers, it is possible to correct sub-flow rates determined for each set of ultrasonic transducers, preferably by tabulated correction values or by functional expressions. Hereby, a high measurement precision can be obtained with a limited number of ultrasonic transducers.

Especially, it has been found that additional inputs in the form of e.g. a temperature at one or more locations inside the fluid, as well as a temperature outside the tube, provide important information to determine the flow rate distribution of the fluid inside the tube. Thus, such additional information can further help to precisely estimate the flow rate distribution and thereby allow a precise correction of the measured sub-flow rates. In some embodiments, one or more ultrasonic transducers sets are used to provide information about temperature of the fluid, however one or more separate temperature sensors may additionally or alternatively be used. Further, a separate temperature sensor can be used to measure an ambient temperature.

In preferred embodiments, at least one ultrasonic transducer set is designed to have an ultrasonic path which allows detection of a swirl in the fluid. Detection of a swirl has been found to be important in estimation of the flow rate distribution and thus in the correction of measured sub-flow rates in spite of a limited number of ultrasonic transducers being used. If it is expected that the flow meter may be used under conditions with special flow rate distributions, the position of the ultrasonic transducers can be specially suited for detection of such flow rate distributions, thereby providing optimal information for the estimation of flow rate distribution to provide the best possible correction of measured sub-flow rates with a minimum number of ultrasonic transducers.

Two, three or four sets of ultrasonic transducers may preferably be used, involving sets of ultrasonic transducers which provide a direct path of ultrasonic signal, or which provide a more complex path involving one or more ultrasonic reflectors.

It has been found to be possible to provide an improved precision for high as well as low flow rates of flow meters with a large tube diameter (including meters with tubes larger than DN100). This can be obtained with a limited number of ultrasonic transducers by adding the extra step of individually correcting the measured sub-flow rates in response to an estimation of actual fluid flow rate distribution in the tube.

This provides a flow meter which provides a high measurement precision also under complicated conditions, e.g. when placed in a piping installation after a bend, a T-branch or a valve etc. where the flow meter can be expected to experience a complex and generally unknown flow rate distribution.

The invention is further advantageous since it may be possible to eliminate the use of flow straightening elements in the form of fins and the like for providing a predictable flow rate distribution in the tube. This allows a flow meter which is mechanically simple, and the pressure drop caused by such straightening elements can be eliminated. Further, the flow meter will have an increased reliability, since it is known that such fins can collect dirt and thereby disturb flow measurements or at least cause increased pressure drop.

In the following, preferred features and embodiments will be described.

The control system is preferably arranged to estimate the flow rate distribution of the fluid in the tube in response to said values indicative of sub-flow rates and at least one additional input.

Especially, the additional input may comprise an input indicative of at least one temperature. Specifically, the additional input may comprise a temperature of the fluid determined in response to ultrasonic signals transmitted between at least one of (or all of) the multiple sets of ultrasonic transducers. Such calculation of fluid temperature based on transmitting and receiving ultrasonic signals through a fluid is known in the art. In some embodiments, all multiple sets of ultrasonic transducers are used to provide respective fluid temperatures as input to the fluid distribution estimation.

The control system may be arranged to receive said at least one additional input from one or more sensors separate from the ultrasonic transducers. Especially, said one or more sensors may comprise one or more of: a temperature sensors arranged to sense a temperature outside the tube, a temperature sensor arranged to measure temperature of the fluid inside the tube, and a pressure sensor arranged to measure a pressure of the fluid inside the tube, and a sensor arranged to sense an orientation of the tube.

In some embodiments, said additional input comprises an input indicative of information about a physical configuration of an installation to which the inlet and outlet of the tube is arranged for. This allows an increased possibility of correctly estimating the actual fluid flow distribution in the tube without the use of a high number of ultrasonic transducers. In a practical implementation, such information can be entered e.g. during installation of the flow meter, or it can be entered during manufacturing of the flow meter, in case the actual installation environment of the flow meter is already known. Especially, the information may comprise one or more of: information about any bend of a pipe connected to the inlet of the tube, information about a pump being present in a pipe connected to the inlet of the tube, information about a valve being present in a pipe connected to the inlet of the tube, and information about an orientation of the tube when connected to the installation.

In some embodiments, the flow meter is configured for receiving an input indicative of a viscosity of the fluid. Especially, if the flow meter is manufactured for various types of fluids (e.g. drinking water as well as fluid for heat or cooling distribution), the viscosity of the fluid can be entered as a parameter to allow a precise fluid flow distribution estimation and thus an optimal correction.

In preferred embodiments, the control system is pre-programmed with a set of a plurality of different flow rate distributions of the fluid in a cross-sectional area of the tube, wherein each of said flow rate distributions has assigned a set of individual correction values for the sub-flow rates of the fluid along the different paths. Thus, based on the sub-flow rates and possible additional inputs (temperatures etc.), the control system performs a kind of image recognition process to determine which of a plurality of predetermined flow rate distributions is the most likely one to be present, e.g. where each ultrasonic path can be regarded as representing a pixel in the image, and the color of the pixel is the determined sub-flow rate for the ultrasonic path. This may be based on various predetermined algorithms or rules which take into account the available sub-flow rates and additional inputs to determine which flow rate distribution corrections to be used.

The meter may comprise a self-learning algorithm, which when supplied with the 'true' flow rate (a reference measurement) is capable of building its own library of correction values associated with the observed sub-flow rates and/or additional process values, such as temperatures, mean transit times, local and overall pressures, ambient temperature etc. The meter may receive the externally supplied information via a wireless interface, such as near field communication (NFC), optical communication, Bluetooth, Zigbee, Z-wave etc.

In preferred embodiments, the control system is arranged to compare the estimated flow rate distribution of the fluid in a cross-sectional area of the tube with the pre-programmed set of flow rate distributions, wherein the control system is arranged to select one of the set of flow rate distributions which is most similar to the estimated flow rate distribution, and wherein the control system is arranged to correct values for the individual sub-flow rates of the fluid along the different paths according to the assigned set of individual correction values for the selected one of the flow rate distributions. Especially, the control system may comprise a set of at least 10 different flow rate distributions of the fluid in the tube, such as 10-50 different flow rate distributions of the fluid in the tube, each with a set of predetermined sub-flow rate correction values.

Alternatively or additionally, the control system may have a calculation algorithm that calculates sub-flow rate correction values in response to the sub-flow rates and any additional inputs.

The flow meter may comprise three, four or five sets of ultrasonic transducers arranged for transmitting and receiving ultrasonic signals propagating through the fluid along respective different paths inside the tube. It is to be understood that more than five sets of ultrasonic transducers may be used, however, it has been found that with the estimation of flow distribution, it is possible to provide a high flow rate measurement precision with a limited number of ultrasonic transducers.

In preferred embodiments, at least one ultrasonic transducer set is arranged for transmitting and receiving ultrasonic signals along a path which is shaped to allow detection of a swirl in the fluid inside the tube. To allow detection of a swirl, the path may especially comprise a plurality of path portions to direct ultrasonic signals in different direction. Especially, the path may involve at least one chord shaped portion, and/or the path may involve at least a triangular shaped portion. Specifically, the path may involve a plurality of path portions, such as at least three path portions provided by two ultrasonic reflectors, so as to form a screw along a longitudinal axis of the tube. Especially, the control system may be arranged to combine ultrasonic measurements from two different sets of ultrasonic transducers to determine a measure indicative of a swirl in the fluid inside the tube. Detection of a swirl has been found to be important for providing a suitable correction of the sub-flow rates.

In some embodiments, at least two ultrasonic transducer sets are arranged for transmitting and receiving ultrasonic signals along respective paths which are parallel and separated by a distance. This configuration has been found to be suitable for providing information for discrimination between various possible flow rate distributions.

In preferred embodiments, at least one of said different paths comprises a projection along a longitudinal axis of the tube. This has been found to be preferable configuration to provide at least one sub-flow rate. However, this may be combined with at least one of said different paths which does not comprise a projection along the longitudinal axis of the tube.

In some embodiments, at least one ultrasonic transducer set is arranged for transmitting and receiving ultrasonic signals along a path comprising at least a portion with a direction component perpendicular to a longitudinal axis of the tube.

In a specific embodiment, the flow meter comprises
- a first set of ultrasonic transducers arranged for transmitting and receiving ultrasonic signals propagating through the fluid along a first path with a direction component perpendicular to a longitudinal axis of the tube,
- a second set of ultrasonic transducers arranged for transmitting and receiving ultrasonic signals propagating through the fluid along a second path with a direction component perpendicular to a longitudinal axis of the tube, wherein the second path is different from the first path,
- a third set of ultrasonic transducers arranged for transmitting and receiving ultrasonic signals propagating through the fluid via a third path comprising at least three path portions shaped to form a screw in one direction of the tube, and
- a fourth set of ultrasonic transducers arranged for transmitting and receiving ultrasonic signals propagating through the fluid via an ultrasonic reflector along a fourth path comprising at least three path portions shaped to form a screw in opposite direction of the screw formed by the third path.

Such embodiment has been found to be suited for precisely discriminating between a number of significantly different flow rate distributions, and thus allow a highly versatile flow meter capable of high precision measurements under varying flow distribution conditions, including swirls, still only with the use of four sets of ultrasonic transducers.

In preferred embodiments, the calculation of the flow rate further involves correcting an intermediately calculated flow rate value by a tabulated correction factor in response to a measure of fluid temperature and in response to the intermediately calculated flow rate calculated flow rate value. This correction is preferably based on measured correction factors for the specific flow meter design. In practice, of course this correction can be combined with the described sub-flow rate correction based on the estimated flow rate distribution, e.g. in one multi-dimensional table of correction values.

In some embodiments, the control system has a self-learning function. Especially, the self-learning function may be arranged to generate a set of individual correction values for the sub-flow rates in response to one or more reference inputs. If the meter is installed, it is possible to utilize the self-learning algorithm to enable the meter to learn the specific flow rate distributions produced by the specific installation. In particular, if a reference flow meter is present in vicinity of the meter, the reference flow rate may be fed into the learning algorithm to form a basis for building a correction table or functional expression.

The tube may have a cross sectional area of at least 20 cm², such as at least 50 cm². Especially, the invention is highly suitable for flow meters having tubes of DN100 or more. However, it is to be understood that the invention may also be used to increase measurement precision of smaller flow meters. In some embodiments, the tube may have a diameter in the range of 4-48 inches and be arranged to measure flow rates up to 1200 M³/h.

In preferred embodiments, the tube has a circular cross sectional area.

It is to be understood that the estimation of flow rate distribution should be calculated at suitable intervals for providing suitable corrections of the sub-flow rates accordingly. The flow rate distribution estimation may be at performed at predetermined regular time intervals, or it may be performed in response to the measure sub-flow rates or especially when changes in sub-flow rates exceeding a predetermined threshold are observed.

The correction values for correction of the sub-flow rates are preferably predetermined based on measurements on the actual flow meter design. Especially, the corrections can be tabulated values, one set of correction values for each of a plurality of different flow rate distributions which can be recognized.

It is known in the art how to provide a suitable tube (e.g. a metallic or polymeric tube), how to provide an arrangement of sets of ultrasonic transducers (e.g. piezo-electric transducers) as well as measurement circuits for calculation of sub-flow rates. Especially, the measurement of sub-flow rates may be based on the transit time flow meter principle, where ultrasonic signals are emitted at one ultrasonic transducer and received at the other ultrasonic transducer, and where the difference in time-of-arrival between oppositely propagating signals is measured and converted into a flow rate.

The control system may be one integrated circuit with a processor operating measurement circuits connected to the ultrasonic transducers. However, it may be preferred that the part of the control circuit which performs the estimation of flow rate distribution is a separate from the measurement circuits.

The control system may be arranged in a housing mounted on or being integral with the tube, or the control system, or a part of it, may be arranged away from the tube by means of a wired or wireless connection with components mounted on or in the tube.

The flow meter tube and/or housing elements may be made from a polymer material or alternatively a composite material. As an alternative, the flow meter housing or parts of the housing may be made from a metal such as stainless steel, brass or another suitable metal.

The flow meter housing elements may be made from a polymeric material selected from, but is not limited to, the group consisting of polyphenylene sulphide (PPS), polyether sulphone (PES) and Polyether Sulphone (PSU).

It is noted that the properties of the polymeric materials can be customized by adding certain additives prior to the molding process, thus forming a composite polymer material. Such additives can be used to affect the material properties such as stiffness, density or the acoustic impedance. Examples of potential additives include reinforcement materials such as glass fibers, density increasing fillers such as chalk (calcium carbonate, CaCO3) or powdery stainless steel raising the acoustic impedance of the material.

The tube may be a standard tube, but is not limited to, a standard tubes designed and produced according to EN ISO 1127:1997 or ANSI/ASME B 36.19:2004 or ASTM A 530:2018 or ASTM B677:2016.

In a second aspect, the invention provides a consumption meter comprising a flow meter according to any of the preceding claims, wherein the consumption meter is arranged to measure a consumed amount of a utility and being arranged to transmit a signal indicative of the consumed amount of the utility by means of a communication interface. Especially, the consumption meter may be one of: a water meter, a gas meter, a heat meter, and a cooling meter.

In preferred embodiments, the consumption meter is configured for wireless reading. Specifically, the consumption meter may comprise a communication module arranged to transmit data indicative of a consumed amount of the utility, such as a flow rate and/or other data, by means of a wireless Radio Frequency link to a remote receiver.

The consumption meter may be used in connection with district heating, district cooling and/or distributed water supply. An energy meter may include one or more temperature sensors to calculate the thermal energy in the fluid flowing through the tube into and/or out of a consumption site whereby the energy consumption can be calculated.

The consumption meter may be a legal meter, i.e. a meter which is subdued to regulatory demands. Such regulatory demands may be demands to the precision of the measurements.

In a third aspect, the invention provides a utility system comprising a plurality of flow meters according to the first aspect.

In a fourth aspect, the invention provides a utility system comprising a plurality of consumption meters according to the second aspect, wherein the plurality of consumption meters are arranged to measure a consumed amount of a utility at respective consumer sites. Especially, the consumption meters may be: water meters, gas meters, heat meters, or cooling meters.

In a fifth aspect, the invention provides a method for measuring a flow rate of a fluid through a tube with a through-going opening for passage of the fluid between an inlet and an outlet, the method comprising
- transmitting and receiving ultrasonic signals through the fluid along respective different paths inside the tube;
- generating values indicative of respective sub-flow rates of the fluid along the different paths accordingly;
- estimating a flow rate distribution of the fluid in the tube in response to said values indicative of sub-flow rates;
- correcting values for the individual sub-flow rates of the fluid along the different paths in response to said estimated flow rate distribution; and
- generating a signal indicative of flow rate of the fluid in response to said corrected values for sub-flow rates of the fluid along the different paths.

### BRIEF DESCRIPTION OF THE FIGURES

The consumption meter, according to the invention, will now be described in more detail with regard to the accompanying figures. The figures show one way of implementing the present invention and is not to be construed as being limiting to other possible embodiments falling within the scope of the attached claim set.
FIG. 1 illustrates examples of flow distributions in a tube with a circular cross section;
FIG. 2 illustrates a sketch of a section of a tube of a flow meter or consumption meter embodiment with two sets of ultrasonic transducers providing different ultrasonic paths;
FIG. 3 illustrates a block diagram of functional elements of a control system of a flow meter or consumption meter embodiment;
FIG. 4 illustrates a block diagram of a specific implementation of estimation of flow rate distribution;
FIG. 5 illustrates a block diagram of an example of calculation of flow rate based on correction of estimated flow rate distribution and based on correction of fluid temperature;
FIG. 6a and 6b illustrate sketches of examples of ultrasonic transducer configurations and ultrasonic reflectors to provide paths to allow detection of a swirl in the fluid inside the tube;
FIG. 7 illustrates an example of ultrasonic transducer configurations to allow discrimination of different flow rates and/or temperatures in the cross sectional area of the tube;
FIG. 8 illustrates a simple example of ultrasonic transducer configurations suitable detecting a swirl in the fluid;
FIG. 9a and 9b illustrate an example of a tube with three ultrasonic paths and three specific examples of estimated flow distributions in case of measured temperatures and sub-flow rates; and
FIG. 10 illustrates steps of a method embodiment.

### DETAILED DESCRIPTION OF AN EMBODIMENT

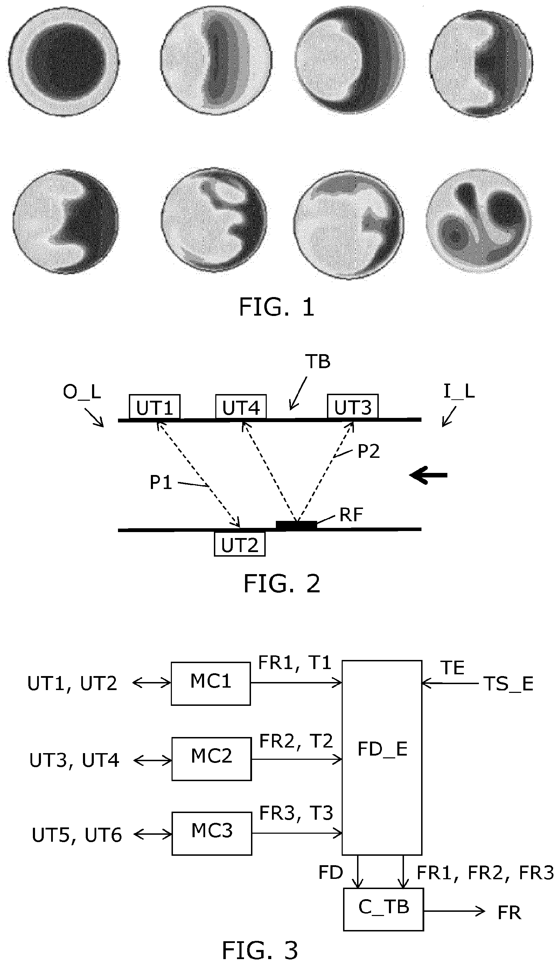

FIG. 1 shows examples of possible flow rate distribution in a flow meter tube with a circular cross section under various conditions. The shade indicates the flow rate: a light shade indicates low flow rate, while a dark shade indicates a high flow rate. As seen, the flow rate distributions are significantly different, indicating that it is not possible to reliable measure a total flow rate through the tube with just one single ultrasonic measurement path along the axial extension of the tube - a measurement procedure which is normal for small flow meters.

In general, the different flow rate distributions in the tube are caused by various conditions, including physical properties in the piping installation upstream (bends etc.), and difference between fluid temperature and ambient temperature, i.e. the temperature outside the tube. Especially for large dimension flow meters or consumption meters, flow rates within the cavity of the tube may vary significantly between different sections of the cavity. Further, the flow rate distribution is generally dynamic, e.g. in case of turbulence, the flow rate distribution will vary rapidly over time. For large dimension flow meters layered flow may occur especially at low flow rates where the fluid may be layered due to temperature differences of the fluid, causing the flow velocity to be different between sections of the cavity. The layers having different temperature will have different flow velocities.

The basic idea behind the invention is that it is possible to measure sub-flow rates in a plurality of ultrasonic paths in the tube, estimate the actual flow rate distribution of the fluid in a cross-sectional area of the tube, and accordingly correct the measured sub-flow rates based on the estimated actual flow rate distribution. The flow rate distribution may be determined based on further inputs, preferably including one or more temperatures, especially a temperature outside the fluid and a temperature of the fluid. The correction can be done by tabulated correction values, one set of correction values for each flow rate distribution, and based on the corrected sub-flow rates, a measure of the flow rate can be calculated. Hereby, it is possible to reliably measure a flow rate with a limited number of ultrasonic transducers in spite the fact that the actual flow rate distribution in the tube can vary significantly.

The flow measurements performed by the individual sets of ultrasonic transducers may be performed at random time points. Collisions in time of measurements by different ultrasonic transmissions can thus occur, which may disturb the measurements. Such disturbed measurements may be detected and discarded. Alternatively, to avoid collisions, the individual sets of ultrasonic transducers may be synchronized to avoid two sets of ultrasonic transducers measuring at the same point of time. The control system preferably controls the timing of the measurements of the individual sub-flow rates. E.g. each set of ultrasonic transducers has its individual control circuit, and a timer in the overall control system sends a time synchronization signal to each of the individual control circuits to allocate measurement time slots to each of the sets of ultrasonic transducers.

FIG. 2 illustrates a sketch of elements of a flow meter embodiment. The sketch shows a longitudinal section of a tube TB having a through-going opening between an inlet I_L and an outlet O_L in which a fluid flow (flow direction indicated by a bold arrow). First and second sets of two ultrasonic transducers, UT1, UT2 and UT3, UT3, are positioned at the wall of the tube TB so as to transmit ultrasonic signals through the fluid in the tube TB via respective paths P1, P2. The first set of ultrasonic transducers UT1, UT2 are positioned to transmit ultrasonic signals directly to each other, while the second set of ultrasonic transducers UT3, UT3 are positioned to transmit ultrasonic signals to each other via an ultrasonic reflector RF positioned at the wall of the tube TB.

The ultrasonic transducer sets UT1, UT2, and UT3, UT4 are operated by control or measuring circuits to measure sub-flow rates along the respective paths P1, P2 according to the transmit time principle as known in the art. However, instead of simply averaging the two measured sub-flow rates, the flow meter according to the invention uses the measured sub-flow rates as input to an estimation of the flow rate distribution of the fluid in the tube by a control system, as will be explained below.

FIG. 3 show a block diagram of functional elements of a control system embodiment. In the shown embodiment, three measurement circuits MC1, MC2, MC3 operate three sets of ultrasonic transducers: a first set UT1, UT2, a second set UT3, UT4, and a third set UT5, UT6. These sets of ultrasonic transducers UT1-UT6 are positioned to provide three different ultrasonic measurement paths in the tube, as sketched in FIG. 2. The measurement circuits MC1, MC2, MC3 operate the ultrasonic transducer UT1-UT6 according to the known transit time principle and thereby measures respective sub-flow rates FR1, FR2, FR3. Further, based on absolute time measurements, respective fluid temperatures T1, T2, T3 are also measured based on the ultrasonic signals for each of the ultrasonic transducer sets. The sub-flow rates FR1, FR2, FR3 and the temperatures T1, T2, T3 are provided as input for estimating flow distribution in the tube FD_E. A temperature sensor TS_E further provides a temperature input TE indicative of temperature outside the tube. According to all of these inputs FR1, FR2, FR3, T1, T2, T3, and TE, a flow rate distribution FD is estimated, e.g. as a number or an index of one of a plurality of predetermined possible flow rate distributions. This number or index is provided to a correction table C_TB with a table of correction values for each of the sub-flow rates FR1, FR2, FR3, with flow distribution as an index. Hereby, each individual sub-flow rates FR1, FR2, FR3 can be corrected in response to the estimated flow rate distribution, and finally the corrected sub-flow rates are used to calculate the total flow rate FR.

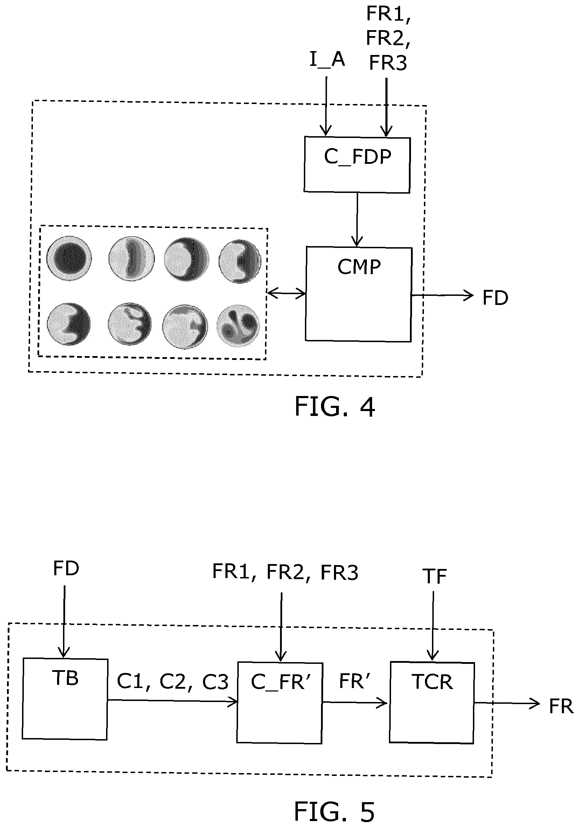

FIG. 4 shows a functional block diagram of a possible implementation of the flow distribution estimation FD_E of FIG. 3. In this embodiment, measured sub-flow rates FR1, FR2, FR3 as well as one or more additional inputs I_A are applied to an algorithm C_FDP calculating a plurality of flow distribution parameters in response. These parameters are then compared CMP to a set of stored flow distributions, and based on this comparison, the best possible match is selected, and an output indicative of the selected flow distribution FD is then output. In principle, the comparison CMP process can be seen as similar to processing known from the field of image processing or image recognition. Based on the paths along which the sub-flow rates FR1, FR2, FR3 have been measured as well as the additional input(s) I_A, a measured image of the flow distribution is generated, and this measured image is then compared with a catalogue of stored images of flow distributions, and the best match can be determined according to a matching algorithm, thus resulting in an estimated flow distribution FD.

FIG. 5 illustrates a function block diagram of a possible implementation of the calculation C_TB of flow rate FR of FIG. 3. In this embodiment, the estimated flow distribution FD, e.g. in the form of an index, is applied to a stored table TB with stored sets of correction values for each individual sub-flow rate FR1, FR2, FR3, for each of a set of separate flow distributions FD. Thus, from the stored table TB, a set of correction values C1, C2, C3 are read, and based on the measured sub-flow rates FR1, FR2, FR3, a calculation C_FR' of an intermediate flow rate FR' is calculated. Finally, based on the temperature TF of the fluid, a correction from a correction table TCR is applied to the intermediate flow rate FR' to determine the final flow rate FR. This final correction step TCR has the purpose of increasing measurement precision across a high temperature and flow rate range.

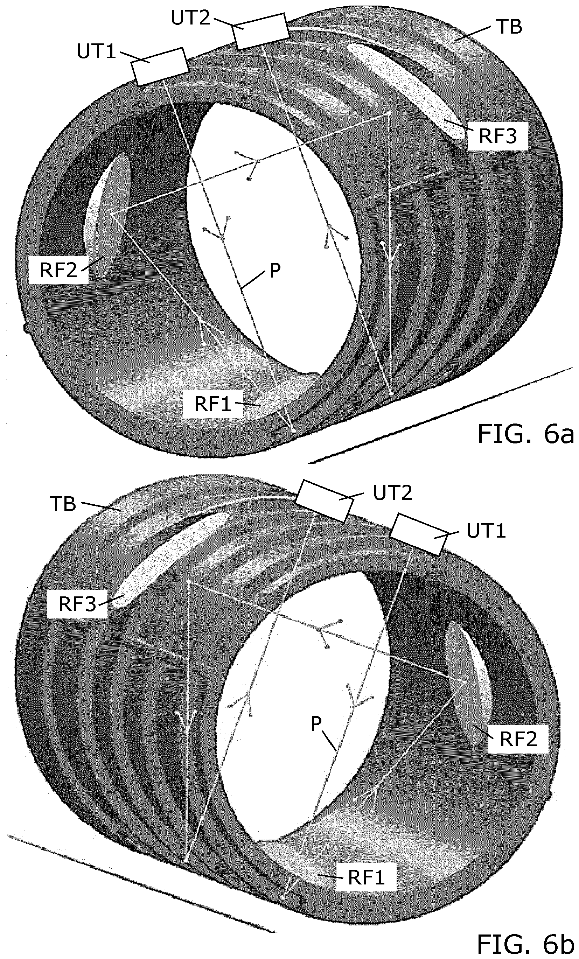

FIG. 6a and 6b show two different examples of providing ultrasonic measurement paths P (indicated by arrows) in a flow meter tube TB based on a single set of ultrasonic transducers UT1, UT2 which transmit and receive ultrasonic signals via three ultrasonic reflectors RF1, RF2, RF3. Hereby, it is possible to precisely detect a swirl in the fluid flowing in the tube TB, and thus an important information to the flow distribution estimation is provided. The configuration in FIG. 6a shows an ultrasonic measurement path P oriented towards the left, while the configuration in FIG. 6b shows an ultrasonic measurement path P oriented towards the right. Especially, in a flow meter embodiment two sets of ultrasonic transducers may be provided to provide a combination of the two configurations of Fig. 6a and 6b, thus allowing detection of both a left and right fluid swirl.

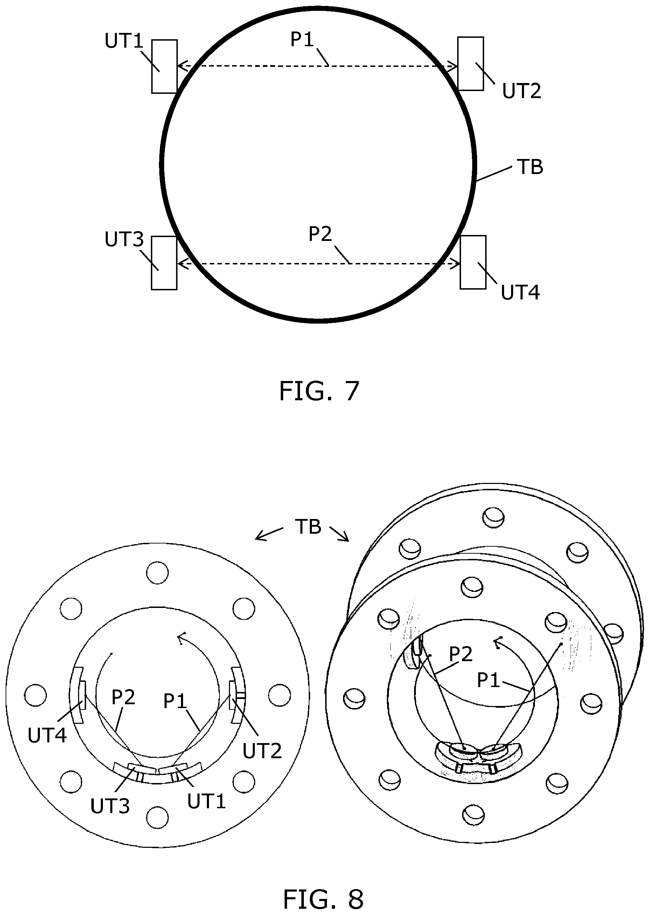

FIG. 7 show an example of a simple configuration of two sets of ultrasonic transducer UT1, UT2, and UT2, UT3 which transmit ultrasonic signal along respective paths P1, P2 which are parallel and which are perpendicular to a longitudinal axis of the tube. Such two sets of ultrasonic transducers can be used to determine different temperature layers in the fluid and further any possible cross flow in the tube.

FIG. 8 shows two different views of an example of a configuration of two sets of ultrasonic transducer UT1, UT2, and UT2, UT3 which transmit ultrasonic signal along respective paths P1, P2 which are perpendicular to a longitudinal axis of the tube, but which define respective chords of the circular cross section of the tube TB. This configuration will allow detection of a swirl (indicated by the circular shaped arrow) of the fluid.

It is to be understood that various combinations of the shown ultrasonic transducer configurations from FIG. 6a, 6b, 7, and 8 can be used, if preferred, depending on the required measurement precision, and depending on the preferred number of ultrasonic transducer sets.

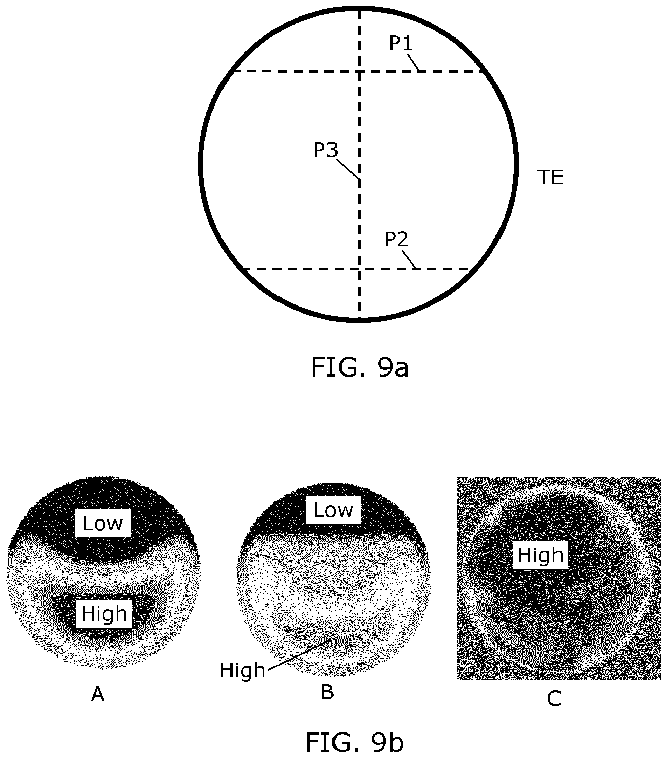

FIG. 9a illustrates a sketch of a cross section of a tube indicating three ultrasonic paths P1, P2, P3 in a tube. It is to be understood that ultrasonic transducers are preferably arranged so that each path P1, P2, P3 has an extension along the longitudinal axis of the tube, so the lines indicating the ultrasonic paths P1, P2, P3 merely illustrate a projection of the actual paths on a plane parallel with a cross section of the tube. For each of the ultrasonic paths P1, P2, P3 a sub-flow rate and a fluid temperature can be determined. Further, a temperature TE outside the tube is measured.

FIG. 9b illustrate estimated flow rate distributions indicated by grey scales for three different examples A, B, and C, based on the measurements of the ultrasonic paths P1, P2, P3 and temperature TE outside the tube.

In example A, the temperature outside the tube is TE=30 °C. At ultrasonic path P1 a temperature of 28 °C is measured along with a sub-flow rate of 5 l/h, at ultrasonic path P2 a temperature of 10 °C is measured along with a sub-flow rate of 30 I/h, and at ultrasonic path P3 a temperature of 20 °C is measured along with a sub-flow rate of 20 l/h. This results in an estimated flow rate distribution having a low flow rate on an upper half of the tube cross section, while a high flow rate on a lower half of the tube cross section, thus a clearly non-even flow rate distribution.

In example B, the temperature outside the tube is again TE=30 °C. At ultrasonic path P1 a temperature of 30 °C is measured along with a sub-flow rate of 1 l/h, at ultrasonic path P2 a temperature of 10 °C is measured along with a sub-flow rate of 5 I/h, and at ultrasonic path P3 a temperature of 20 °C is measured along with a sub-flow rate of 10 l/h. This results in an estimated flow rate distributions which is different from example A, but still having a low flow rate on an upper half of the tube cross section, while a rather high flow rate on a lower half of the tube cross section.

In example C, the temperature outside the tube is still TE=30 °C. At ultrasonic path P1 a temperature of 11 °C is measured along with a sub-flow rate of 1000 I/h, at ultrasonic path P2 a temperature of 10 °C is measured along with a sub-flow rate of 1000 I/h, and at ultrasonic path P3 a temperature of 10 °C is measured along with a sub-flow rate of 1000 l/h. This results in an estimated flow rate distributions which is different from an evenly distributed flow rate, in spite the fact that the same sub-flow rate is measured for all three paths P1, P2, P3.

Examples A, B and C illustrate that the rather limited data values (temperature and sub-flow rates for each ultrasonic path P1, P2, P3) can be used to estimate significantly different flow rate distributions which therefore also require different corrections of the measured sub-flow rates for a precise determination of the total flow rate, also under more complicated conditions.

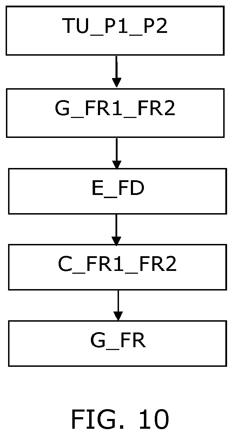

FIG. 10 illustrates steps of an embodiment of a method for measuring a flow rate of a fluid through a tube with a through-going opening for passage of the fluid between an inlet and an outlet. The method comprises transmitting TU_P1_P2 and receiving ultrasonic signals through the fluid along respective different paths inside the tube. Based on the ultrasonic signals, generating G_FR1_FR2 values indicative of respective sub-flow rates of the fluid along the different paths. Next, estimating E_FD a flow rate distribution of the fluid in the tube in response to said values indicative of sub-flow rates and preferably in response to one or more temperatures. Next, correcting C_FR1_FR2 values for the individual sub-flow rates of the fluid along the different paths in response to said estimated flow rate distribution. Finally, generating G_FR a signal indicative of flow rate of the fluid in response to said corrected values for sub-flow rates of the fluid along the different paths.

The method may comprise one or more initial steps of storing sets of correction values for a plurality of different flow rate distributions determined for the actual configuration of the tube and ultrasonic signal paths, so as to allow a high precision flow rate measurement independent of the flow rate distribution in the tube.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A flow meter arranged to measure a flow rate (FR) of a fluid, the flow meter comprising:
- a tube (TB) with a through-going opening for passage of the fluid between an inlet (I_L) and an outlet (O_L);
- multiple sets of ultrasonic transducers (UT1-UT6), wherein each set of ultrasonic transducers comprises first and second ultrasonic transducers (UT1, UT2) arranged for transmitting and receiving ultrasonic signals propagating through the fluid along a path (P1, P2) inside the tube, wherein said multiple sets of ultrasonic transducers (UT1-UT6) are arranged for transmitting and receiving ultrasonic signals propagating through the fluid along different paths (P1, P2) inside the tube (TB); and
- a control system comprising one or more control circuits (MC1, MC2, MC3) arranged for operating the multiple sets of ultrasonic transducers (UT1-UT6), and being arranged to generate values indicative of respective sub-flow rates (FR1, FR2, FR3) of the fluid along the different paths (P1, P2) accordingly,
**characterized in that** the control system is arranged to estimate a flow rate distribution (FD) of the fluid in a cross-sectional area of the tube (TB) in response to said values indicative of sub-flow rates (FR1, FR2, FR3), wherein the control system is arranged to correct values for the individual sub-flow rates (FR1, FR2, FR3) of the fluid along the different paths (P1, P2) in response to said estimated flow rate distribution (FD), and wherein the control system is arranged to generate a signal indicative of the flow rate (FR) of the fluid based on said corrected values for sub-flow rates of the fluid along the different paths (P1, P2).

2. The flow meter according to claim 1, wherein the control system is arranged to estimate the flow rate distribution of the fluid in the tube (TB) in response to said values indicative of sub-flow rates and at least one additional input (I_A, TE).

3. The flow meter according to claim 2, wherein the additional input comprises an input indicative of a at least one temperature (TE).

4. The flow meter according to claim 3, wherein the additional input comprises a temperature (T1, T2, T3) of the fluid determined in response to ultrasonic signals transmitted between at least one of the multiple sets of ultrasonic transducers (UT1-UT6).

5. The flow meter according to any of claims 2-4, wherein the control system is arranged to receive said at least one additional input from one or more sensors (TS_E) separate from the ultrasonic transducers (UT1-UT6).

6. The flow meter according to claim 5, wherein said one or more sensors comprises one or more of: a temperature sensors (TS_E) arranged to sense a temperature (TE) outside the tube, a temperature sensor arranged to measure temperature of the fluid inside the tube, and a pressure sensor arranged to measure a pressure of the fluid inside the tube, and a sensor arranged to sense an orientation of the tube.

7. The flow meter according to any of claims 2-6, wherein said additional input comprises an input indicative of information about a physical configuration of an installation to which the inlet and outlet of the tube is arranged for.

8. The flow meter according to any of the preceding claims, wherein the control system is pre-programmed with a set of a plurality of different flow rate distributions of the fluid in a cross-sectional area of the tube, wherein each of said flow rate distributions has assigned a set of individual correction values for the sub-flow rates of the fluid along the different paths.

9. The flow meter according to claim 8, wherein the control system is arranged to compare the estimated flow rate distribution of the fluid in a cross-sectional area of the tube with the pre-programmed set of flow rate distributions, wherein the control system is arranged to select one of the set of flow rate distributions which is most similar to the estimated flow rate distribution, and wherein the control system is arranged to correct values for the individual sub-flow rates of the fluid along the different paths according to the assigned set of individual correction values for the selected one of the flow rate distributions.

10. The flow meter according to any of the preceding claims, comprising three sets of ultrasonic transducers (UT1-UT6) arranged for transmitting and receiving ultrasonic signals propagating through the fluid along respective different paths (P1, P2) inside the tube.

11. The flow meter according to any of the preceding claims, wherein at least one ultrasonic transducer set is arranged for transmitting and receiving ultrasonic signals along a path comprising a plurality of path portions to direct ultrasonic signals in different direction to allow detection of a swirl in the fluid inside the tube.

12. The flow meter according to any of the preceding claims, wherein at least one of said different paths comprises a projection along a longitudinal axis of the tube (TB).

13. The flow meter according to any of the preceding claims, wherein at least one ultrasonic transducer set is arranged for transmitting and receiving ultrasonic signals along a path comprising at least a portion with a direction component perpendicular to a longitudinal axis of the tube (TB).

14. The flow meter according to any of the preceding claims, comprising
- a first set of ultrasonic transducers arranged for transmitting and receiving ultrasonic signals propagating through the fluid along a first path with a direction component perpendicular to a longitudinal axis of the tube,
- a second set of ultrasonic transducers arranged for transmitting and receiving ultrasonic signals propagating through the fluid along a second path with a direction component perpendicular to a longitudinal axis of the tube, wherein the second path is different from the first path,
- a third set of ultrasonic transducers arranged for transmitting and receiving ultrasonic signals propagating through the fluid via a third path comprising at least three path portions shaped to form a screw in one direction of the tube, and
- a fourth set of ultrasonic transducers arranged for transmitting and receiving ultrasonic signals propagating through the fluid via an ultrasonic reflector along a fourth path comprising at least three path portions shaped to form a screw in opposite direction of the screw formed by the third path.

15. The flow meter according to any of the preceding claims, wherein the calculation of the flow rate (FR) further involves correcting an intermediately calculated flow rate value (FR') by a tabulated correction factor in response to a measure of fluid temperature (TF) and in response to the intermediately calculated flow rate calculated flow rate value (FR').

16. A utility system comprising a plurality of flow meters according to any of the preceding claims, wherein the plurality of flow meters are arranged to measure a flow rate of a fluid at respective consumer sites.

17. A method for measuring a flow rate of a fluid through a tube with a through-going opening for passage of the fluid between an inlet and an outlet, the method comprising
- transmitting (TU_P1_P2) and receiving ultrasonic signals through the fluid along respective different paths inside the tube;
- generating (G_FR1_FR2) values indicative of respective sub-flow rates of the fluid along the different paths accordingly;
- estimating (E_FD) a flow rate distribution of the fluid in the tube in response to said values indicative of sub-flow rates;
- correcting (C_FR1_FR2) values for the individual sub-flow rates of the fluid along the different paths in response to said estimated flow rate distribution; and
- generating (G_FR) a signal indicative of flow rate of the fluid in response to said corrected values for sub-flow rates of the fluid along the different paths.
